# EUROPÄISCHE PATENTSCHRIFT

(11) **EP 3 872 591 B1**
(45) Veröffentlichungstag und Bekanntmachung des Hinweises auf die Patenterteilung: **08.06.2022**
(21) Anmeldenummer: 21150243.0
(22) Anmeldetag: 05.01.2021
(51) Int. Cl.: G05B 19/418, B65G 43/00, G07C 11/00

(54) **VERFAHREN ZUM VERFOLGEN VON PACKSTÜCKEN AUF EINER FÖRDERSTRECKE**
METHOD FOR TRACKING PACKAGES ON A CONVEYOR
PROCÉDÉ DE SUIVI DE PAQUETS EMBALLÉS SUR UN CONVOYEUR

(30) Priorität: 27.02.2020 DE 102020105217
(43) Veröffentlichungstag der Anmeldung: 01.09.2021
(73) Patentinhaber: Deutsche Post AG, 53113 Bonn (DE)
(72) Erfinder: Tzschichholtz, Ingo, 60435 Frankfurt am Main (DE)
(74) Vertreter: Michalski Hüttermann & Partner Patentanwälte mbB

(56) Entgegenhaltungen:
- US-A- 5 335 777
- US-B1- 10 422 852

## Beschreibung

Die Erfindung betrifft ein Verfahren zum Verfolgen von Packstücken auf einer Förderstrecke. Auch betrifft die Erfindung ein Computerprogrammprodukt umfassend Anweisungen, die beim Ausführen mittels einer Datenverarbeitungseinrichtung, bewirken, dass die Datenverarbeitungseinrichtung die Schritte des Verfahrens ausführt.

Förderstrecken werden in vielen Bereichen zum Transportieren und Sortieren von Packstücken verwendet. Der genauen Bestimmung der Position der Packstücke entlang der Förderstrecke kommt dabei eine große Bedeutung zu. Bei einigen Förderstrecken wird die Position des Packstücks beispielsweise durch die Erfassung des Vorbeilaufens des Packstücks durch einen einzelnen Fotodetektor bestimmt, der neben der Förderstrecke positioniert ist. Wenn sich das Packstück an dem einzelnen Fotodetektor vorbeibewegt, wird seine Position dadurch bestimmt, wie weit sich beispielsweise das Förderband der Förderstrecke seit der Erfassung des Packstücks bewegt hat. Dieses aus dem Stand der Technik bekannte Verfahren zur Bestimmung der Position von Packstücken ist anfällig für Unregelmäßigkeiten. Unregelmäßigkeiten können beispielsweise das temporäre Zusammenschieben von Packstücken, das kurzzeitige Rutschen von Packstücken auf der Förderstrecke, ein Springen der Packstücke auf der Förderstrecke, sowie das kurzzeitige Verklemmen der Packstücke, sein. Aufgrund von Messungenauigkeiten, Schlupf und anderen Faktoren ist diese Berechnung der Position des Packstücks auf der Förderstrecke mit einer erheblichen Unsicherheit behaftet. Diese Unsicherheit der Position des Packstücks auf der Förderstrecke erschwert das Verfolgen des Packstücks entlang der Förderstrecke nach dem Stand der Technik.

In dem Dokument US 10,422,852 B1 werden Systeme und Techniken zur Bestimmung der Position einer oder mehrerer Personen in einer physischen Umgebung beschrieben, z. B. einem Gang in einem Erfüllungszentrum. In einigen Fällen ist der Gang mit einer Vielzahl von Funkfrequenzempfängern, aktiven Infrarot-Sender-Empfänger-Paaren und Passiv-Infrarot-Näherungssensoren ausgestattet. Ein vom Benutzer mitgeführter, Funkfrequenzen aussendender Anhänger wird vom Funkfrequenzempfänger erkannt, um die Identität und die ungefähre Position entlang des Ganges zu bestimmen. Daten, die die Verdunkelung der Strahlen von einem oder mehreren aktiven Infrarot-Sender-Empfänger-Paare anzeigen, ermöglichen eine weitere Präzisierung der Position entlang des Ganges. Die Daten des Passiv-Infrarot-Systems geben Aufschluss darüber, auf welcher Seite des Ganges sich der Benutzer befindet. Dementsprechend kann der Benutzer identifiziert und genau im Gang positioniert werden.

In dem Dokument US 5 335 777 A wird an einer Quellstation ein Datensatz für die Ladung erzeugt, bevor der Datensatz in ein programmierbares Steuergerät zur Steuerung des Förderers geladen wird. Es wird ein Impulssignal mit einer Anzahl von Impulsen erzeugt, die direkt proportional zur Bewegung des Förderbands ist. Es wird ein Erwartungsfenster erstellt, das die erwartete Ankunft der Ladung an der Zielstation anzeigt. Für die Last wird ein Abstandsfeld erstellt, wobei der kleinere der beiden folgenden Werte verwendet wird: der Abstand zwischen der Last und der vorhergehenden Last auf dem Förderband oder der Abstand zwischen der Last und dem Ziel-Lastsensor. Die Vorderkante der Last wird von einem Lastsensor der Zielstation erfasst, wobei der Abstand zwischen dem Quell- und dem Ziellastsensor verglichen wird. Ein eventueller Schlupf der Ladung auf dem Band wird erkannt und die Datenaufzeichnung in der Steuerung basiert auf dem erkannten Schlupf der Ladung, um mit der tatsächlichen Position der Ladung auf dem Förderband an der Zielstation übereinzustimmen.

Ausgehend von dem oben genannten Stand der Technik liegt der Erfindung somit die Aufgabe zugrunde, ein Verfahren zum Verfolgen von Packstücken auf einer Förderstrecke anzugeben, wobei die Verfolgungsrate von Packstücken in der verbindenden Fördertechnik an einer diskreten Position maximiert werden soll. Insbesondere ist es Aufgabe der vorliegenden Erfindung Abbrüche oder Fehler bei der kontinuierlichen Verfolgung der Packstücke zwischen einem ersten Punkt und einer diskreten Position, verursacht z.B. durch Fehl- oder Nichtauslösen von Lichtschranken, durch Schlupf der Packstücke auf der Förderfläche, sowie durch Zusammenschieben, Entnahme oder Zugabe von Packstücken an beliebigen Positionen der Förderstrecke zu eliminieren oder zu korrigieren. Gleichzeitig soll die Fehlverfolgungsrate minimal gehalten werden.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren nach Anspruch

Grundidee der vorliegenden Erfindung ist es also, mittels eines Algorithmus anhand gegebener Anlagenparameter im Zeitverlauf bei gegebener Geometrie der Förderstrecke, an einer diskreten Position im Förderstreckenverlaufjedem Lichtschrankensignal das wahrscheinlichste Packstück zu zuordnen. Dabei wird ausgehend von einer leeren Menge eine Liste von möglichen Ereignisfolgen erstellt und anhand ihrer Eintrittswahrscheinlichkeit sortiert. Dann wird die wahrscheinlichste Ereignisfolge um alle möglichen Anschlussereignisse verlängert, für jede dieser Verlängerungen die Wahrscheinlichkeit der Folge ermittelt und entsprechend alle Verlängerungen als neue mögliche Ereignisfolgen in die Liste der Ereignisfolgen einsortiert. Dies wird solange wiederholt, bis die wahrscheinlichste Ereignisfolge die komplette gemessene Ereigniskette abbildet. Anhand der gegebenen Anlagenparameter, beispielsweise anhand von zeitlichen Signalverläufen von Lichtschranken entlang der Förderstrecke und der Fördergeschwindigkeit der Förderstrecke, kann mittels eines Algorithmus eine höhere Verfolgungsrate bei gleichzeitig nicht höherer Fehlverfolgungsrate, im Vergleich zum Verfolgen beispielsweise durch eine dezentrale Materialflusssteuerung, erreicht werden. Eine Ereignisfolge besteht dabei aus mehreren Ereignissen die nacheinander aufgrund der Folge der Packstücke hervorgerufen wird.

Erfindungsgemäß erfolgt der Schritt des Abschätzens einer Ereignisfolge, die das Lichtschrankenmuster mit einer höchsten Wahrscheinlichkeit verursacht hat, mittels eines Viterbi-Algorithmus. Der Viterbi-Algorithmus ist ein Algorithmus der dynamischen Programmierung zur Bestimmung der wahrscheinlichsten Sequenz von verborgenen Zuständen bei einem gegebenen Hidden Markov Model (HMM) und einer beobachteten Sequenz von Symbolen. Hidden Markov Modelle sind Markov-Ketten, in denen bei jedem Übergang etwas ausgegeben wird, wobei die Ausgabe wiederum von einer Wahrscheinlichkeitsverteilung bestimmt wird. Mit diesem System kann man die Wahrscheinlichkeit, mit der ein bestimmter Zustand vorliegt, bestimmt werden. Hierfür muss bekannt sein, wie diese Wahrscheinlichkeiten zum Zeitpunkt der Initialisierung waren. Auch gibt es Vorgänge die nicht direkt beobachtet werden können, sondern von denen nur Signale erfasst und ausgewertet werden können. Diese müssen dann ausreichen, um Rückschlüsse auf das wahre Geschehen zu ziehen. Zur Beschreibung solcher im Verborgenen ablaufenden nicht deterministischer Vorgänge bieten sich statistische Modellierungen wie die der Hidden Markov Models an. Oft ist es jedoch gar nicht möglich ein System direkt zu beobachten sondern man kann lediglich sehen, welche Auswirkungen es auf seine Umwelt hat. Ein Hidden Markov Model besteht aus n Zuständen die jedoch nicht direkt beobachtet werden können. Jeder dieser Zustände emittiert zu jedem Zeitpunkt t ein zufällig ausgewähltes sichtbares Symbol oder auch sichtbarer Zustand genannt. In dem vorliegenden Problem geht es darum für ein bestimmtes HMM die Sequenz verborgener Zustände zu finden, die mit der größten Wahrscheinlichkeit die beobachtete Sequenz erzeugt hat.

In einer weiteren Ausführungsform der Erfindung umfasst die Wahrscheinlichkeit einen Wahrscheinlichkeitsfaktor, wobei der Wahrscheinlichkeitsfaktor zwischen 0 und 1 liegt, wobei ein Ereignis, dass durch das Lichtschrankenmuster erklärt werden kann einen Wahrscheinlichkeitsfaktor von 1 hat und ein Ereignis, dass durch das Lichtschrankenmuster nicht erklärt werden kann einen Wahrscheinlichkeitsfaktor von 0 hat.

Erfindungsgemäß werden die Anschlussereignisse anhand eines Lichtschrankenmusters zumindest einer weiteren Lichtschranke bestimmt. Eine weitere Lichtschranke ist vorteilhaft, da hierdurch ein weiteres sichtbares Symbol oder sichtbarer Zustand für die Berechnung der Wahrscheinlichkeit erfasst werden kann.

Erfindungsgemäß entspricht das Ereignis und das Anschlussereignis einem Ereignis ausgewählt aus der folgenden Liste: ein Packstück wird ungehindert transportiert und/oder ein Packstück wird von der Förderstrecke entnommen und/oder ein Packstück wird zu der Förderstrecke hinzugefügt und/oder ein Packstück bleibt an der Position der Lichtschranke hängen und/oder ein Packstück bleibt zwischen zwei Lichtschranken hängen. In einer Ausführungsform der Erfindung werden zusätzlich zur Erfassung des Lichtschrankenmusters und zum Erfassen der Fördergeschwindigkeit der Förderstrecke zumindest Daten von Stauerkennungsmodulen und/oder Daten von Motoren der Förderstrecke und/oder Daten eines Lesetunnels der Förderstrecke und/oder Routingentscheidungen an Flussweichen erfasst und in der Abschätzung einer Ereignisfolge, die das Lichtschrankenmuster mit einer höchsten Wahrscheinlichkeit verursacht hat, berücksichtigt. Das Erfassen und Hinzuziehen weiterer Daten ist vorteilhaft, da hierdurch das Ergebnis der Abschätzung einer Ereignisfolge, die das Lichtschrankenmuster mit einer höchsten Wahrscheinlichkeit verursacht hat, weiter verbessert werden kann. Insbesondere kann es vorgesehen sein, dass die Daten des Lesetunnels die Dimensionen des Packstücks sowie sein Gewicht beinhalten.

Erfindungsgemäß ist außerdem ein Computerprogrammprodukt angegeben, umfassend Anweisungen, die beim Ausführen mittels einer Datenverarbeitungseinrichtung, bewirken, dass die Schritte des Verfahrens nach den Ansprüchen 1 bis 3 ausgeführt werden.

Nachfolgend wird die Erfindung unter Bezugnahme auf die anliegende Zeichnung anhand bevorzugter Ausführungsformen näher erläutert.

Es zeight:
- Fig. 1: ein Weg-Zeit-Diagramm von mehreren Packstücken auf einer Förderstrecke, sowie mehrere Lichtschrankensignale gemäß einem Ausführungsbeispiel der Erfindung,
- Fig. 2: ein Ablaufdiagramm eines Verfahrens zum Verfolgen von Packstücken auf einer Förderstrecke gemäß einem ersten Ausführungsbeispiel der Erfindung,
- Fig. 3: ein Ablaufdiagramm eines Verfahrens zum Verfolgen von Packstücken auf einer Förderstrecke gemäß einem weiteren Ausführungsbeispiel der Erfindung,

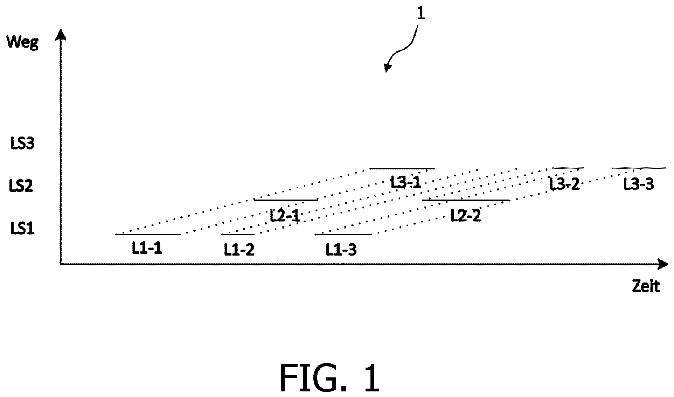

Fig. 1 zeigt ein Weg-Zeit-Diagramm von mehreren Packstücken auf einer Förderstrecke, sowie mehrere Lichtschrankensignale L1-1, L1-2, L1-3, L2-1, L2-2, L3-1, L3-2, L3-3 gemäß einem Ausführungsbeispiel der Erfindung. Die Weg-Achse zeigt die Position entlang der Förderstrecke an. An drei Positionen befinden sich Lichtschranken LS1, LS2 und LS3 an der Förderstrecke. Wenn ein Packstück an einer Lichtschranke LS1, LS2, LS3 vorbeifährt, wird sie für eine bestimmte Zeit unterbrochen. Die Unterbrechungen sind Fig. 1 eingezeichnet und mit L1-1 bis L3-3 gekennzeichnet.

Die Förderstrecke fördert die Packstücke z.B. kontinuierlich mit konstanter Geschwindigkeit. In einem Ausführungsbeispiel der Erfindung kann es insbesondere vorgesehen sein, dass auch Bandbeschleunigungen und Bandstopps berücksichtigt werden. In der in Fig. 1 gezeigten Ausführungsform hinterlassen die Packstücke auf der Förderstrecke gerade Linien im Weg-Zeit-Diagramm. Zum Beispiel würde ein Packstück, dass die Lichtschrankenauslösung L1-1 verursacht, zwischen den beiden gepunkteten Linien, die an den Enden von L1-1 beginnen, durch das Weg-Zeit-Diagramm laufen. Jede weitere Auslösung einer Lichtschranke LS2, LS3 läge entsprechend zwischen diesen gepunkteten Linien. Wird ein Packstück jedoch unterwegs verzögert, dann werden folgende Lichtschrankenauslösungen nach rechts (d.h. auf einen späteren Zeitpunkt) verschoben. Bleibt ein Packstück hängen, während es die Lichtschranke LS1, LS2, LS3 auslöst, dann verlängert sich das Lichtschrankensignal L1-1, L1-2, L1-3, L2-1, L2-2, L3-1, L3-2, L3-3 entlang der Zeit-Achse. In einem Ausführungsbeispiel der Erfindung können beispielsweise die folgenden Ereignisse während des Transports von einer Lichtschranke LS1, LS2, LS3 zur nächsten zugelassen werden.

| | Ereignis | Eintrittswahrscheinlichkeit |
|---|---|---|
| I | Ein Packstück wird ungehindert, d.h. konstant, transportiert. | C<1 |
| II | Ein Packstück wird entnommen. | R<<1 |
| III | Ein Packstück wird hinzugefügt. | A<<1 |
| IV | Ein Packstück bleibt an der Position der Lichtschranke LS1, LS2, LS3 hängen. | S_{L}<<1 |
| V | Ein Packstück bleibt zwischen den Lichtschranken LS1, LS2, LS3 hängen. | S_{B}<<1 |

Die Liste ist jedoch nicht abschließend und kann in weiteren Ausführungsbeispielen der Erfindung weitere Ereignisse beinhalten. Beispielsweise können Verdrehungen der Packstücke zugelassen werden, wodurch sich die Dauer der Lichtschrankenauslösungen verändert. Auch kann es vorgesehen sein, dass zwischen langen und kurzen Hängenbleibern unterschieden wird, wobei kürzere Hängenbleiber mit einer anderen (höheren) Wahrscheinlichkeit versehen werden, als längere Hängenbleiber.

Ein Algorithmus ermittelt jetzt, welches Szenario, d.h. welche Konstellation von Packstücken entlang der Förderstrecke und welche Ereignisfolge das in Fig. 1 eingezeichnete Muster an Lichtschrankenauslösungen L1-1, L1-2, L1-3, L2-1, L2-2, L3-1, L3-2, L3-3 mit der höchsten Wahrscheinlichkeit verursacht hat. Auch hier vereinfachen wir im Beispiel und sagen, das Lichtschrankenmuster lässt sich durch ein Ereignis erklären (Faktor 1) oder nicht (Faktor 0). In einer Ausführungsform der Erfindung kann insbesondere auch ein Wahrscheinlichkeitsfaktor zwischen 0 und 1 vorgesehen sein, um z.B. Messungenauigkeiten zu berücksichtigen und zu gewichten. In einer Ausführungsform der Erfindung kann der Algorithmus insbesondere ein Viterbi-Algorithmus sein.

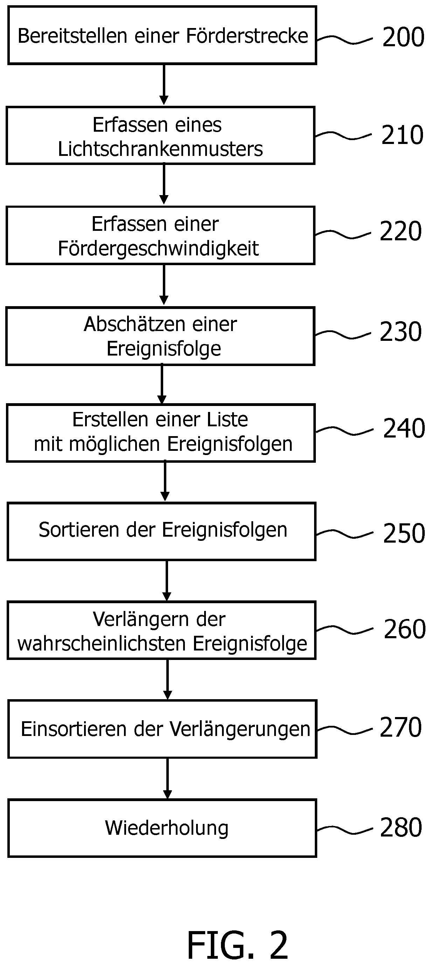

Die Fig. 2 zeigt ein Ablaufdiagramm eines Verfahrens zum Verfolgen von Packstücken auf einer Förderstrecke gemäß einem ersten Ausführungsbeispiel der Erfindung. Das Ablaufdiagram bezieht sich dabei in dem Ausführungsbeispiel auf das in Fig. 1 gezeigte Weg-Zeit-Diagramm von mehreren Packstücken auf einer Förderstrecke, sowie der in Fig. 1 gezeigten Lichtschrankensignale.

Das Verfahren startet mit Schritt 200 in dem eine Förderstrecke mit einer Förderfläche zum Fördern einer Folge von Packstücken bereitgestellt wird, wobei die Förderstrecke zumindest eine Lichtschranke LS1, LS2, LS3 zum Erfassen der Packstücke umfasst. Die Förderstrecke kann beispielsweise aus einem oder mehreren Förderbändern bestehen, die die Packstücke auf einer Förderfläche transportieren.

In Schritt 210 wird ein Lichtschrankenmusters 1 mittels der zumindest einen Lichtschranke LS1, LS2, LS3 erfasst, wobei das Lichtschrankenmuster 1 durch eine Ereignisfolge der Packstücke hervorgerufen wird. Die Packstücke laufen mittels der Förderstrecke an der zumindest einen Lichtschranke LS1, LS2, LS3 vorbei und erzeugen dadurch ein Lichtschrankenmuster 1, indem die Packstücke die zumindest eine Lichtschranke LS1, LS2, LS3 für eine gewisse Zeit unterbrechen L1-1, L1-2, L1-3, L2-1, L2-2, L3-1, L3-2, L3-3. Die Unterbrechungen L1-1, L1-2, L1-3, L2-1, L2-2, L3-1, L3-2, L3-3 sind dabei von der Fördergeschwindigkeit der Förderstrecke abhängig. Aus diesem Grund wird in Schritt 220 die Fördergeschwindigkeit der Förderstrecke bzw. die Fördergeschwindigkeiten aller einzelnen Förderbänder erfasst.

In Schritt 230 wird mittels eines Algorithmus, unter Berücksichtigung der Fördergeschwindigkeit der Förderstrecke, eine Ereignisfolge abgeschätzt, die das Lichtschrankenmuster 1 mit einer höchsten Wahrscheinlichkeit verursacht hat. Hierfür kann beispielsweise ein Viterbi-Algorithmus verwendet werden. Die Grundidee des Viterbi-Algorithmus ist es, ausgehend von einer leeren Menge eine Liste von möglichen Ereignisfolgen zu erstellen und anhand ihrer Eintrittswahrscheinlichkeit zu sortieren. Danach wird die wahrscheinlichste Ereignisfolge um alle möglichen Anschlussereignisse verlängert. Für jede dieser Verlängerungen wird die Wahrscheinlichkeit der Folge ermittelt und entsprechend alle Verlängerungen als neue mögliche Ereignisfolge in die Liste der Ereignisfolgen einsortiert. Dies wird solange wiederholt, bis die wahrscheinlichste Ereignisfolge die komplette gemessene Ereigniskette abbildet. Daher wird in Schritt 240 eine Liste mit möglichen Ereignisfolgen erstellt und in Schritt 250 die Ereignisfolgen anhand ihrer Eintrittswahrscheinlichkeit sortiert.

In Schritt 260 wird die wahrscheinlichste Ereignisfolge um alle möglichen Anschlussereignisse verlängert, wobei für jede Verlängerung die Wahrscheinlichkeit der Ereignisfolge ermittelt wird. Als Ereignis oder als Anschlussereignis kommen beispielsweise die folgenden Ereignisse in Betracht. Ein Packstück wird ungehindert transportiert und/oder ein Packstück wird von der Förderstrecke entnommen und/oder ein Packstück wird zu der Förderstrecke hinzugefügt und/oder ein Packstück bleibt an der Position der Lichtschranke hängen und/oder ein Packstück bleibt zwischen zwei Lichtschranken hängen.

Die Verlängerung wird in Schritt 270 als neue Ereignisfolge in die Liste der Ereignisfolgen einsortiert. Die Schritte 260 und 270 werden in Schritt 280 so lange wiederholt, bis die wahrscheinlichste Ereignisfolge das erfasste Lichtschrankenmuster komplett abbildet.

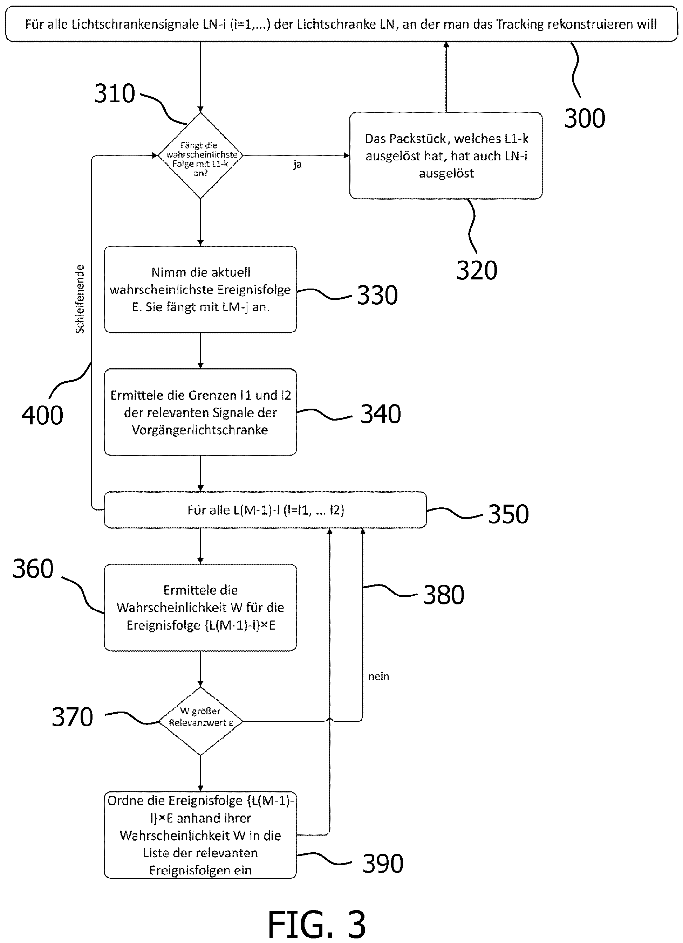

Fig. 3 zeigt ein Ablaufdiagramm eines Verfahrens zum Verfolgen von Packstücken auf einer Förderstrecke gemäß einem weiteren Ausführungsbeispiel der Erfindung. Das Verfahren beginnt mit Schritt 300 in dem alle Lichtschrankensignale LN-i (i=l, ...) der Lichtschranke LN, an der man das Verfolgen eines Packstücks rekonstruieren möchte, bereitgestellt werden. In Schritt 310 wird überprüft, ob die wahrscheinlichste Ereignisfolge mit L1-k anfängt. Fängt die wahrscheinlichste Folge mit L1-k an, kann in Schritt 320 davon ausgegangen werden, dass das Packstück, welcher L1-k ausgelöst hat, auch das Packstück, der LN-i ausgelöst hat. Fängt die wahrscheinlichste Folge nicht mit L1-k an wird in Schritt 330 die aktuell wahrscheinliste Ereignisfolge E genommen, wobei die Ereignisfolge mit Lm-j anfängt. In Schritt 340 werden die Grenzen 11 und 12 der relevanten Signale der Vorgängerlichtschranke ermittelt. Dies wird in Schritt 350 für alle L(M-1)-1 wobei 1=11, ..., l2 ist durchgeführt. In Schritt 360 wird die Wahrscheinlichkeit *W* für die Ereignisfolge {L(M-a)-l}xE ermittelt und in Schritt 370 überprüft, ob die die Wahrscheinlichkeit *W* größer als ein Relevanzwert ε ist. Ist die Wahrscheinlichkeit *W* nicht größer als ein Relevanzwert ε kehrt das Verfahren zurück zum Schritt 350. Ist die Wahrscheinlichkeit *W* größer als ein Relevanzwert ε wird in Schritt 390 die Ereignisfolge {L(M-1)-1}xE anhand ihrer Wahrscheinlichkeit Win die Liste der relevanten Ereignisfolgen eingeordnet. Anschließend geht das Verfahren wieder zurück auf Schritt 350. Das Schleifenende und somit das Ende des Verfahrens ist der Schritt 400 der von Schritt 350 zurück geht auf Schritt 310 in dem überprüft wird, ob die wahrscheinlichste Ereignisfolge mit L1-k anfängt.

In einem Ausführungsbeispiel der Erfindung sind für den Übergang eines Lichtschrankenmusters 1 einer ersten Lichtschranke LS1 zum Lichtschrankenmuster 1 einer zweiten Lichtschranke LS2 folgende Ereignisse vorstellbar.

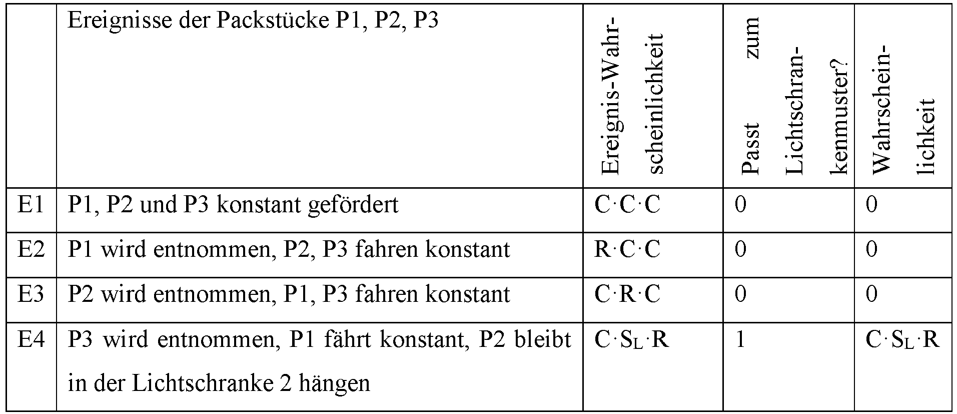

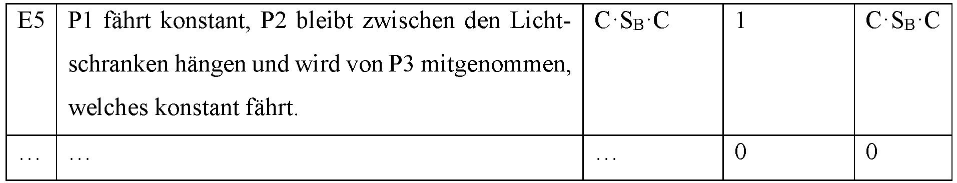

Die Liste der Ereignisfolgen enthält zwei Ereignisfolgen E4 und E5, wobei die Reihenfolge davon abhängt, ob S_{L}·R größer als S_{B}·C ist, oder umgekehrt.

Angenommen es gilt C·S_{L}·R > C·S_{B}·C. Dann wird für die Folge E4 jede mögliche Verlängerung, d.h. jeder Übergang zur Lichtschranke LS3, und deren Wahrscheinlichkeit ermittelt. Die folgende Tabelle zeigt alle durch das Lichtschrankenmuster LS3 erklärbaren Verlängerungen:

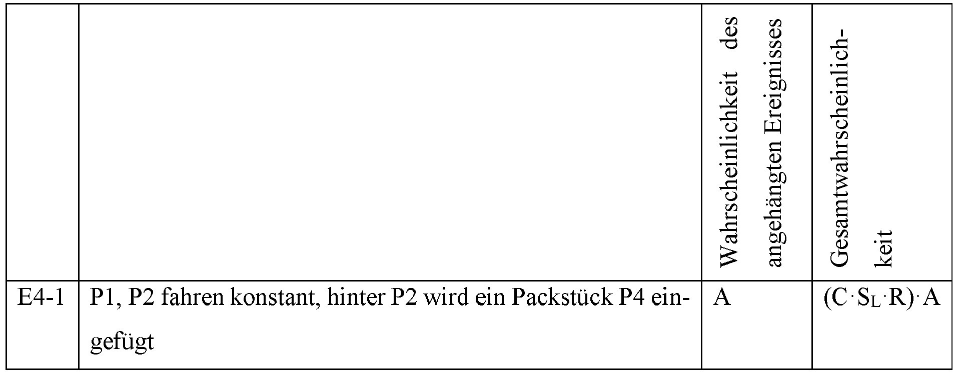

Dadurch enthält die Ereignisfolgenliste jetzt zwei Elemente E4-1 und E5. Wenn (C·S_{L}·R)·A> C·S_{B}·C gilt, bricht der Algorithmus ab, da E4-1 die gesamte gemessene Ereigniskette erklärt. Dann wurde L3-1 durch Packstück 1 ausgelöst, L3-2 durch Packstück 2 und L3-3 durch ein neues Packstück 4.

Falls (C·S_{L}·R)·A < C·S_{B·}C gilt, wird der Algorithmus mit E5 fortgesetzt. Die folgende Tabelle zeigt alle durch das Lichtschrankenmuster LS3 erklärbaren Verlängerungen von E5:

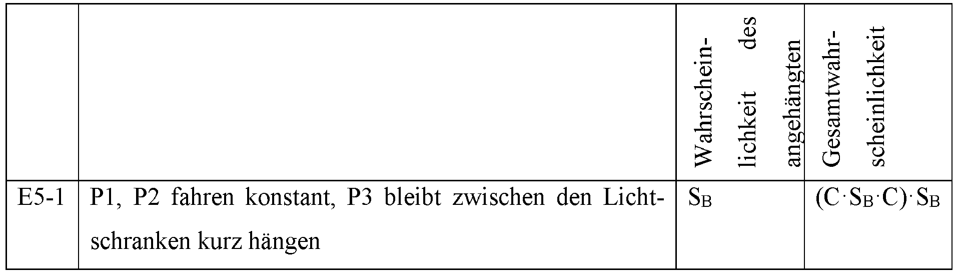

Jetzt enthält die Ereignisfolgenliste wieder zwei Elemente E4-1 und E5-1. Unabhängig davon, welche Folge wahrscheinlicher ist, bricht der Algorithmus auf jeden Fall ab, da beide Folgen die gesamte gemessene Ereigniskette erklären. Wenn (C·S_{L}·R)·A > (C·S_{B}·C)·S_{B} gilt, dann wurde L3-1 durch P1 ausgelöst, L3-2 durch P2 und L3-3 durch ein neues Packstück P4. Ansonsten wurde L3-1 durch P1 ausgelöst, L3-2 durch P2 und L3-3 durch P3.

In einer Ausführungsform der Erfindung kann es weiter vorgesehen sein, dass ein gleitender Betrachtungsfilter über die gemessenen Ereignisse, z.B. die Ereignisse L1-n-1, L1-n, L1-n+1, angewendet wird, passend dazu wählt der Algorithmus eine begrenzte Anzahl relevanter Ereignisse der Lichtschranke L2 aus bis zur Lichtschranke m.

Auch kann es vorgesehen sein, dass die Ereignisse rückwärts durchlaufen werden. D.h. man geht von einem Kontrollpunkt aus, für den man das zu einem konkreten Lichtschrankensignal L1-1, L1-2, L1-3, L2-1, L2-2, L3-1, L3-2, L3-3 passende Packstücke durch Rückwärtsverfolgung ermitteln will, und bewegt sich dann entlang der Förderstrecke rückwärts durch die Lichtschrankensignale L1-1, L1-2, L1-3, L2-1, L2-2, L3-1, L3-2, L3-3. D.h. man hat ein Lichtschrankensignal L1-1, L1-2, L1-3, L2-1, L2-2, L3-1, L3-2, L3-3 und ermittelt die Wahrscheinlichkeit für jedes vorherige Signal der Vorgängerlichtschranke LS1, LS2 LS3, dass vom selben Packstück ausgelöst wurde. Zusätzlich betrachtet man die Möglichkeit, dass das Packstück zwischen den Lichtschranken LS1, LS2 LS3 auf die Förderstrecke gelegt wurde. Für diese Berechnung kann es insbesondere vorgesehen sein, dass man die zurückliegenden Bandgeschwindigkeitsverläufe alle Bänder zwischen den Lichtschranken LS1, LS2 LS3, die Daten eventuell vorhandener Stauerkennungssensoren, Sensordaten von den Motoren der Förderbänder etc. berücksichtigt. Diesen Rückwärtsprozess verfolgt man solange bis man beispielsweise an einem Lesetunnel, d.h. dem ersten Identifikationspunkt auf der Förderstrecke angekommen ist.

**Bezugszeichenliste**

| | |
|---|---|
| Lichtschrankenmuster | 1 |
| 1. Lichtschranke | LS1 |
| 2. Lichtschranke | LS2 |
| 3. Lichtschranke | LS3 |
| Signal der 1. Lichtschranke | L1-1 |
| Signal der 1. Lichtschranke | L1-2 |
| Signal der 1. Lichtschranke | L1-3 |
| Signal der 2. Lichtschranke | L2-1 |
| Signal der 2. Lichtschranke | L2-2 |
| Signal der 3. Lichtschranke | L3-1 |
| Signal der 3. Lichtschranke | L3-2 |
| Signal der 3. Lichtschranke | L3-3 |

## Patentansprüche

1. Verfahren zum Verfolgen von Packstücken auf einer Förderstrecke, wobei die Förderstrecke eine Förderfläche zum Fördern einer Folge von Packstücken umfasst, die Förderstrecke eine Mehrzahl von Lichtschranken (LS1, LS2, LS3) zum Erfassen der Packstücke umfasst, und das Verfahren die folgenden Schritte umfasst:
a) Erfassen (210) eines Lichtschrankenmusters (1) mittels der Lichtschranken (LS1, LS2, LS3), wobei das Lichtschrankenmuster (1) durch die Folge der Packstücke hervorgerufen wird,
b) Erfassen (220) einer Fördergeschwindigkeit zumindest einer Teilstrecke der Förderstrecke,
c) Abschätzen (230) einer Ereignisfolge, die das Lichtschrankenmuster (1) mit einer höchsten Wahrscheinlichkeit verursacht hat, unter Berücksichtigung der Fördergeschwindigkeit der Förderstrecke, mittels eines Viterbi-Algorithmus, wobei der Viterbi-Algorithmus die folgenden weiteren Schritte umfasst:
d) Erstellen (240) einer Liste mit möglichen Ereignisfolgen, wobei eine Ereignisfolge aus einer Mehrzahl von Ereignissen besteht, die nacheinander aufgrund der Folge der Packstücke hervorgerufen wird, wobei jeweils ein Ereignis einem Ereignis entspricht ausgewählt aus der folgenden Liste von Ereignissen: ein Packstück wird ungehindert transportiert und/oder ein Packstück wird von der Förderstrecke entnommen und/oder ein Packstück wird zu der Förderstrecke hinzugefügt und/oder ein Packstück bleibt an der Position der Lichtschranke hängen und/oder ein Packstück bleibt zwischen zwei Lichtschranken hängen,
e) Sortieren (250) der Ereignisfolgen anhand ihrer Eintrittswahrscheinlichkeit,
f) Verlängern (260) der wahrscheinlichsten Ereignisfolge um alle möglichen Anschlussereignisse, wobei für jede Verlängerung die Wahrscheinlichkeit der Ereignisfolge ermittelt wird, wobei ein Anschlussereignis einem Ereignis entspricht ausgewählt aus der folgenden Liste von Ereignissen: ein Packstück wird ungehindert transportiert und/oder ein Packstück wird von der Förderstrecke entnommen und/oder ein Packstück wird zu der Förderstrecke hinzugefügt und/oder ein Packstück bleibt an der Position der Lichtschranke hängen und/oder ein Packstück bleibt zwischen zwei Lichtschranken hängen,
g) Einsortieren (270) der Verlängerungen als neue Ereignisfolge in die Liste der Ereignisfolgen,
h) Wiederholung (280) der Schritte f) bis g) bis die wahrscheinlichste Ereignisfolge das erfasste Lichtschrankenmuster (1) komplett abbildet.

2. Verfahren nach dem vorherigen Anspruch, wobei die Eintrittswahrscheinlichkeit einen Wahrscheinlichkeitsfaktor umfasst, wobei der Wahrscheinlichkeitsfaktor zwischen 0 und 1 liegt, wobei
bei einem Wahrscheinlichkeitsfaktor von 0 ein Ereignis der Ereignisfolge ausgeschlossen ist,
bei einem Wahrscheinlichkeitsfaktor von 1 das Ereignis der Ereignisfolge sicher eingetreten ist, und
bei einem Wahrscheinlichkeitsfaktor von 0 < x <1 die Wahrscheinlichkeit für das Ereignis weder ausgeschlossen noch sicher eingetreten ist.

3. Verfahren nach einem der vorherigen Ansprüche, wobei zusätzlich zur Erfassung des Lichtschrankenmusters (1) und zum Erfassen der Fördergeschwindigkeit der Förderstrecke zumindest Daten von Stauerkennungsmodulen und/oder Daten von Motoren der Förderstrecke und/oder Daten eines Lesetunnels der Förderstrecke und/oder Daten von Routingentscheidungen an Flussweichen erfasst werden und in der Abschätzung einer Ereignisfolge (230), die das Lichtschrankenmuster (1) mit einer höchsten Wahrscheinlichkeit verursacht hat, berücksichtigt werden.

4. Computerprogrammprodukt, umfassend Anweisungen, die beim Ausführen mittels einer Datenverarbeitungseinrichtung bewirken, dass die Schritte des Verfahrens nach den Ansprüchen 1 bis 3 ausgeführt werden.

## Claims

1. Method for tracking packages on a conveyor section, the conveyor section comprising a conveyor surface for conveying a sequence of packages, the conveyor section comprising a plurality of photoelectric barriers (LS1, LS2, LS3) for detecting the packages and the method comprising the following steps:
a) detecting (210) a photoelectric barrier pattern (1) by means of the photoelectric barriers (LS1, LS2, LS3), the photoelectric barrier pattern (1) being caused by the sequence of packages,
b) detecting (220) a conveyor speed of at least one subsection of the conveyor section,
c) estimating (230) an event sequence which has with the highest probability caused the photoelectric barrier pattern (1), while taking into account the conveyor speed of the conveyor section, by means of a Viterbi algorithm, the Viterbi algorithm comprising the following further steps:
d) compiling (240) a list of possible event sequences, an event sequence consisting of a plurality of events caused in succession on account of the sequence of packages, a respective event corresponding to an event selected from the following list of events: a package is transported unimpeded and/or a package is removed from the conveyor section and/or a package is added to the conveyor section and/or a package becomes stuck at the position of the photoelectric barrier and/or a package becomes stuck between two photoelectric barriers,
e) sorting (250) the event sequences with the aid of their occurrence probability,
f) extending (260) the most probable event sequence by all possible consecutive events, the probability of the event sequence being determined for each extension, a consecutive event corresponding to an event selected from the following list of events: a package is transported unimpeded and/or a package is removed from the conveyor section and/or a package is added to the conveyor section and/or a package becomes stuck at the position of the photoelectric barrier and/or a package becomes stuck between two photoelectric barriers,
g) incorporating (270) the extensions as a new event sequence into the list of event sequences,
h) repeating (280) steps f) to g) until the most probable event sequence fully reflects the detected photoelectric barrier pattern (1).

2. Method according to the preceding claim, wherein the occurrence probability comprises a probability factor, the probability factor lying between 0 and 1,
with a probability factor of 0, an event of the event sequence being excluded,
with a probability factor of 1, the event of the event sequence has definitely taken place, and
with a probability factor of 0 < x < 1, the probability of the event is neither excluded nor has definitely taken place.

3. Method according to either of the preceding claims, wherein in addition to the detection of the photoelectric barrier pattern (1) and the detection of the conveyor speed of the conveyor section, at least data of blockage detection modules and/or data of motors of the conveyor section and/or data of a reading tunnel of the conveyor section and/or data of routing decisions at flow branches are detected and are taken into account in the estimation of an event sequence (230) which has with the highest probability caused the photoelectric barrier pattern (1).

4. Computer program product comprising instructions which, when carried out by means of a data processing device, cause the steps of the method according to Claims 1 to 3 to be carried out.

## Revendications

1. Procédé permettant de suivre des colis sur une voie de transport, la voie de transport comprenant une surface de transport pour transporter une série de colis, la voie de transport comprenant une pluralité de barrières lumineuses (LS1, LS2, LS3) servant à détecter les colis, et le procédé comprenant les étapes suivantes consistant à :
a) détecter (210) un motif de barrière lumineuse (1) au moyen des barrières lumineuses (LS1, LS2, LS3), le motif de barrière lumineuse (1) étant provoqué par la série des colis,
b) détecter (220) une vitesse de transport d'au moins d'un tronçon de la voie de transport,
c) estimer (230) une série d'événements qui a provoqué le motif de barrière lumineuse (1) ayant la plus haute probabilité, en tenant compte de la vitesse de transport de la voie de transport, au moyen d'un algorithme de Viterbi, l'algorithme de Viterbi comprenant les étapes supplémentaires suivantes consistant à :
d) créer (240) une liste de séries d'événements possibles, une série d'événements étant composée d'une pluralité d'événements qui sont provoqués les uns après les autres en raison de la série des colis, respectivement un événement correspondant à un événement sélectionné sur la liste suivante d'événements : un colis est transporté sans problème et/ou un colis est retiré de la voie de transport et/ou un colis est ajouté à la voie de transport et/ou un colis reste accroché à la position de la barrière lumineuse et/ou un colis reste accroché entre deux barrières lumineuses,
e) trier (250) les séries d'événements à l'aide de leur probabilité d'occurrence,
f) prolonger (260) la série d'événements la plus probable par tous les événements de liaison possibles, la probabilité de la série d'événements étant déterminée pour chaque prolongement, un événement de liaison correspondant à un événement sélectionné sur la liste d'événements suivante : un colis est transporté sans problème et/ou un colis est retiré de la voie de transport et/ou un colis est ajouté à la voie de transport et/ou un colis reste accroché à la position de la barrière lumineuse et/ou un colis reste accroché entre deux barrières lumineuses,
g) insérer (270) les prolongements sous la forme d'une nouvelle série d'événements dans la liste des séries d'événements,
h) répéter (280) les étapes f) à g) jusqu'à ce que la série d'événements la plus probable représente complètement le motif de barrière lumineuse (1) détecté.

2. Procédé selon la revendication précédente, dans lequel la probabilité d'occurrence comprend un facteur de probabilité, le facteur de probabilité étant compris entre 0 et 1, dans lequel
pour un facteur de probabilité égal à 0, un événement de la série d'événements est exclu,
pour un facteur de probabilité égal à 1, l'événement de la série d'événements est survenu avec certitude, et
pour un facteur de probabilité égal à 0 < x < 1, la probabilité de l'événement n'est ni exclue ni survenue avec certitude.

3. Procédé selon l'une quelconque des revendications précédentes, dans lequel en plus de la détection du motif de barrière lumineuse (1) et de la détection de la vitesse de transport de la voie de transport, au moins des données provenant de modules de reconnaissance d'accumulation et/ou des données provenant des moteurs de la voie de transport et/ou des données provenant d'un tunnel de lecture de la voie de transport et/ou des données provenant de décisions d'acheminement au niveau d'aiguillages de flux sont détectées et prises en considération pour l'estimation d'une série d'événements (230) provoquée par le motif de barrière lumineuse (1) ayant la plus haute probabilité.

4. Produit de programme informatique, comprenant des instructions qui, lorsqu'elles sont exécutées au moyen d'un dispositif de traitement de données, provoquent l'exécution des étapes du procédé selon les revendications 1 à 3.
